# EUROPEAN PATENT SPECIFICATION

(11) **EP 0 429 596 B1**
(45) Date of publication and mention of the grant of the patent: **13.03.1996**
(21) Application number: 90908533.4
(22) Date of filing: 05.06.1990
(51) Int. Cl.: D06N 7/00

(54) **FLEXIBLE BASE WEB FOR A CONSTRUCTION COVERING, AND A CONSTRUCTION COVERING MANUFACTURED FROM SAID WEB**
FLEXIBLE GRUNDPLATTE EINER BAUABDECKUNG UND EINE DARAUS HERGESTELLTE BAUABDECKUNG
BANDE DE BASE SOUPLE POUR UNE COUVERTURE DE CONSTRUCTION, ET COUVERTURE DE CONSTRUCTION FABRIQUEE A PARTIR DE LADITE BANDE

(30) Priority: 05.06.1989 FI 892751
(43) Date of publication of application: 05.06.1991
(73) Proprietor: ROCTEX OY AB, SF-21600 Parainen (FI)
(72) Inventor: NIEMINEN, Jorma, SF-38700 Kankaanpää (FI); LE BELL, Jean, SF-20780 Kaarina (FI); WESTERLUND, Ulf, SF-21600 Pargas (FI); NÄRHI, Erkki, SF-21230 Lemu (FI)
(74) Representative: Haft, von Puttkamer, Berngruber, Czybulka
(86) International application number: FI9000153
(87) International publication number: WO9015181

(56) References cited:
- EP-A- 0 176 847
- EP-A- 0 315 553
- GB-A- 1 293 685
- US-A- 4 522 876

## Description

The invention relates to a relatively thin flexible web, which is meant for use as a base web for construction coverings. The invention relates also to construction coverings, such as floor or wall coverings or roofings, manufactured form said web.

It is known to use as a base of different building materials, such as floor or wall coverings, roofing felts etc., a felt-like material for effecting sound/or thermal insulation. Especially good step sound dampening properties and also thermal insulation capability as well as capability of protecting constructions from possible fire are required particularly in the case of floor and wall coverings. Same properties, especially concerning the fire protection, are required in the case of roofing felts.

The webs in question and building materials having such webs as their bases, as well as other manufacturing methods of the same are widely discussed in patent litterature, for example in European Patent Application 176,847 (Hoechst AG), German Offenlegungsschrift DE-A-1,919,709 (Saint Gobain), German Offenlegungsschrift DE-A-3,226,041 (Didier-Werken AG), US-patent 4,657,801 (Hoechst AG), British Patent 1,532,621 (Nairn Floors Ltd.), German Offenlegungsschrift DE-A-3,017,018 (GAF Corporation) and US-patent 4,175,514 (GAF Corporation).

Said patents and patent applications disclose webs and products manufactured therefrom having no optimal thermal insulation and fire protection properties nor processability in manufacture.

The GB-A-1293685 describes composites comprising a web having reinforcing filaments embedded.

The object of the present invention is to effect an improvement concerning the above mentioned products. For realizing the purpose the web according to the invention is mainly characterized by what is disclosed in characterizing portion of claim 1. The web has a main layer, the principal construction of which is constituted of discontnuous mineral fibres (most preferably at least 50 w-%). The fibres are bonded together mechanically. The main layer forms the greatest layer in the base web in thickness and in grammage (weight per unit area). In addition, the base web may have an additional layer for improving its adherence or strength. The base web is preferably fabricated in a dry process using air stream, in which case the main layer is formed of randomly oriented mineral fibres. Further, according to one advantageous embodiment, the layer containing mineral fibres contains in addition blend fibres of different type, such as glass fibres chopped from filaments, or synthetic fibres, which blend fibres also are bonded to the mineral fibres and each other by needling. Further, according to a preferred embodiment, onto the layer comprising mineral fibres is secured a thinner surface layer containing thermally bondable fibres, which layer most preferably is secured to the mineral fibre layer by needling too. Said surface layer comprises preferably at least two different fibre materials having different melting points. Further, the invention emcompasses various coverings having the base web of the invention as their carrier layer and a polymeric impervious layer, such as PVC of CPE, as the coating layer of the base web.

The invention will be described in the following more closely with reference to accompanyinq drawings, where
- Fig. 1: shows schematically the web of the invention in cross-section,
- Fig. 2: shows the web according to another alternative as well as a product manufactured therefrom in cross-section, and
- Fig. 3: illustrates a method for manufacturing the web of the invention.

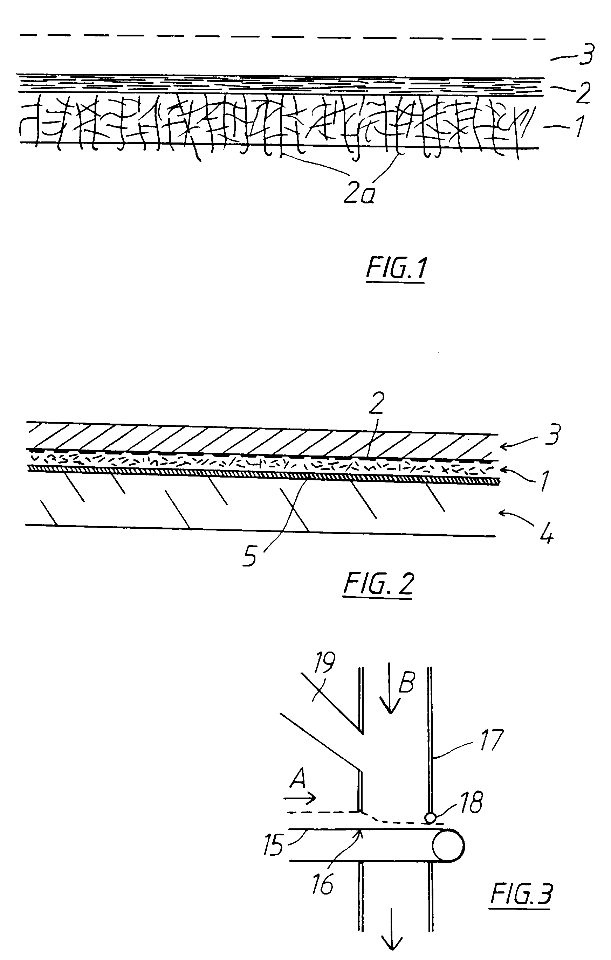

The main layer is denoted by reference numeral 1 in Figs. 1 and 2. The main layer comprises mainly discontinuous mineral fibres, such as mineral wool, glass wool or slag wool fibres or ceramic fibres or carbon fibres, generally relatively short discontinuous fibres. The term "discontinuous fibre" means in this context the opposite of a filament fibre. By virtue of a good adherence effected by the invention, the weight of the main layer 1 may be quite large, such as 2000 g/m. Grammage of the main layer may, however, vary within a wide range, e.g. between 80-2000 g/m. An optimal fire protection and sound dampening without need for making the main layer too thick is achieved with values 200-600 g/m. The density of the main layer is preferably over 200 kg/m³ for achieving a good insulation capability. The length of the mineral fibres in the main layer is mostly within a range of 1-20 mm, preferably 4-10 mm. In the case of glass wool fibres and carbon fibres, the above-mentioned values may be greater. Considering the costs and thermal resistance, mineral wool and slag wool fibres are preferred.

The non-woven mineral fibre mat forming the main layer 1 is manufactured preferably using a dry method without chemical binders. The term dry method implies in this context that the pre-treated discontinuous fibres have been blown by means of an air stream on top of a perforate wire to form a mat while the air stream passes through said wire. Reference is made to a previous Finnish Patent Application No. 880755 by the Applicant, describing said method in more details. Pre-treated fibres, that is, mineral fibres, which are disentangled from each other so thoroughly as possible prior to forming the mat and from which impurities have been removed after the melt-spinning of the mineral fibers, have been used as a raw material for the mat.

A separate coating layer 3 applied on top of the base web for making a sandwich-type construction covering may be any applicable hardenable paste which is adhered to the base web by the effect of heat and/or chemical bonding. Alternatively the top of the base web can be provided with the coating layer 3 in a film form by laminatig by heating the surface of the film to the softening temperature before it is joined to the surface of the base web. The coating layer may be of any synthetic polymeric material forming a closed impervious top surface of the construction covering. Suitable materials are e.g. PVC (polyvinyl chloride) or CPE (chlorinated polyethylene).

The fibres of the main layer 1 can be mixed with other fibres as well, called hereinafter "blend fibres" during the forming of the fibrous mat, for example with chopped glass fibres in an amount not higher than 40 w-% or with synthetic fibres, such as with polyester, in an amount not higher than 20 w-%. The term "chopped glass fibre" means that the chopped glass fibres are prepared by cutting continuous glass filament into shorter fibres, whereby these fibres have homogenic properties as regards thickness and strength, making them useful as a reinforcing fibre in a web the rest of which is mainly constituted of fibres of not so uniform properties, such as rock wool or slag wool fibres. The upper limit of the amount of chopped glass fibres is determined by their relatively high price. The term "synthetic fibre" means fibre of a synthetic polymeric material. The blend fibres mixed inside the main layer in course of the mat laying process together with the mineral fibres can be utilized in forming the strength of the fibrous mat without decreasing its fire protection or sound dampening properties. When the main layer 1 is made to a consolidated layer mechanically by needling, the fibres mixed in the above-described manner serve as an aid for this purpose. Especially where the medium length of the blend fibres is greater than that of the mineral fibres, these fibers serve effectively as the contributing factor to the strength. The blend fibres can also be used as an aid in consolidating the web by subjecting the fibrous mat forming the main layer 1 to a light thermal bonding.

Where the blend of fibers is used, the medium length of the synthetic fibres can be e.g. 20-25 mm and the medium length of the chopped glass fibers can be ca 50 mm. In this case, the length of the mineral fibres can be within the range of 3-10 mm. The curvature or "crimp" of the synthetic fibres is also an asset in bonding the mineral fibres together.

In Fig 1 is shown a base web according to one embodiment of the invention, a so-called combination web. The base web is a non-woven flexible mat manufactured of relatively short fibres described hereinabove. The main layer 1 of the combination web consists mostly of discontinuous mineral fibres and on top of it there is a surface layer 2 containing fibres bonded together thermally. The surface layer 2 is quite thin, 0,5-1 mm, and is constituted either wholly or partly of such discontinuous fibres orientated parallelly with the main plane of the base web, hereinafter called bonding fibers, which in a thermal treatment can be melted and which thereby bond the fibres together. The thermal treatment takes place preferably at a temperature 100-200 °C. The surface layer can contain at least two materials melting at different temperatures. By melting the fibres of one material entirely in a thermal treatment the surface layer retains its fibrous structure due to the other fibres having a higher melting point.

A coating layer 3 may be fixed thermally to the base web either by bringing it in a melted state onto the web, or by melting the layer partly on the side facing the web before bringing it into contact with the base web. After coming in contact with the web the melted polymeric material on solidifying binds the coating layer 3 to the web. One advantage of the invention when the combination web is coated thermally with a coating layer 3 brought to a suitable state, e.g. with a melted paste or with a partly melted film, is that the coating layer and the supporting main layer 1 can in this case not directly interact with each other. When a coating layer in a melted flowing state is used, the material would without the presence of a separating material penetrate quite deeply into the main layer 1 causing a not-uniform change in the properties of the layer, and it can thus not be controlled easily for finding an advantageous optimum state. In this case, undesirable alterations in quality ought to be accepted, or much efforts and expenses ought to be used solely for reaching a uniform quality. When a paste is used its consumption would be large due to the open fibrous structure of the mineral fiber layer of the web in comparison to the use the paste is meant for. The separating effect of the surface layer 2 is more important in the case of flowing coating paste, but it has also a bonding effect to be discussed hereinafter.

The surface layer 2 acts also as a bonding layer between the coating 3 and the main layer 1. Because the surface layer 2 has fibres bondable thermally together, they are also bonded due to the hot coating paste firmly to the coating layer. If the surface layer has two different fibre materials having different melting points, the fibres of the higher melting material can first be bonded together so, that the lower melting material is caused to melt during a thermal treatment of the base web before the coating, as presented hereinabove. The coating with the coating layer on top of the combination can thereafter be carried out at the melting temperature of the higher melting material.

By choosing the components of the surface layer 2 according to the actual need, the adherence properties can be controlled within a wide range without any side effect on the other properties of the main layer 1. The bonding fibres of the surface layer may comprise e.g. polyethylene melting at ca 100 °C and polyester melting at ca 200 °C. Also other material combination may be used, such as polyethylene-polypropene or polypropene-polyester. The above-mentioned substances shall be understood to mean also their copolymers, that is, polymers containing their monomeric units, or also their derivatives, that is, polymers having the carbon skeleton of the basic polymer and the bonds between the monomeric units, but different side groups.

The combination web of the invention affords versatile possibilities for use as parts of different construction materials. For example a coating paste to be spread at a later stage can not penetrate into the actual main layer, which can be any web structure containing predominantly mineral fibres. The properties of the main layer can thus be optimized in course of the manufacture of the combination web quite exactly to be on a desired level, without needing to worry about the changes of these properties due to another material spread or attached onto the web at a later stage.

The surface of the surface layer 2 is smooth towards the coating layer 3 after the heat treatment following the needling, to such an extent that it has no protruding fibres. Its porosity can be, however, adjusted in a controllable manner by choosing the fibre grades and the thermal treatment according to the need in order to afford a good adherence surface for the paste. The adherence is also promoted by chemical bonding, which can be effected by treating the surface according to the need using methods known as such.

The reference numeral 2a denotes in Fig 1 schematically the fibres of the surface layer which due to needling extend transversely in the main layer 1 and of which a part is exposed on the opposite side of the main layer. It is also possible to use these synthetic fibres 2a forming a pile-like structure on the opposite side of the main layer 1 as an aid in attaching the coating layer 3 onto the main layer 1. On this side the fibres 2a form a surface which can be formed to a thin film in a thermal pretreatment, on which film the plastics material of the coating layer can easily be secured thermally either by laminating in the above-mentioned manner or as a melted paste. It is thus possible to form also on the opposite side of the main layer a sort of thin surface layer having separating and binding effect. If the coating layer 3 is attached on this side, the surface layer 2 constitutes the lower free surface of the web and acts merely as a reinforcing layer in this case.

The amount of the thermally bondable bonding fibres in the surface layer 2 can be 10-100 p-% of the entire fibrous amount of the layer. 20-40 p-% has proved to be an advantageous range. The fibres of the surface layer 2 are also discontinuous fibers. The weight of the surface layer can alter between 10-100 g/m, and the length and thickness of the fibres respectively between 2-30 mm and 4-30 um. The rest of the fibres of the surface layer 2 can be fibres not thermally bondable, such as other synthetic polymer fibres which can not be thermally bonded.

In Fig. 2 there is shown a product suitable especially as a covering material on roofs. The product is manufactured by using a base web of the invention as the carrying layer. The covering material comprises a coating layer 3 protecting from weather conditions, beneath of which is the base web of the invention, on which the layer 3 is fixed either by applying a coating layer as a melted paste on top of it or by laminating the coating layer 3 and the base web together in a heated calendering machine. The coating layer 3 can be PVC (polyvinyl chloride) or CPE (chlorinated polyethylene) plastics or other weather-resistant plastics material. Chlorinated plastics materials have been proven useful, as they, in addition to good weather resistance and processability, have fire resisting properties due to their chlorine content. In the following, the position of some fibres inside the base web of Fig. 2 are discussed in more detail, these fibre arrangements serve to improve the strength of the web and are also applicable to the web shown in Fig. 1. The base web contains in consistency with the example of Fig. 1 a main layer 1 formed of discontinuous mineral fibres using a dry method. The web may contain also blend fibres discusse hereinabove. The portion of these blend fibres can be greater in the proximity of one of the surfaces of the main layer 1 than that is in the middle, in which case the strength of the product is improved. Blend fibres can be in this case fibres blended inside the main layer 1 originally during the dry method forming of the mat, whereafter they have been shifted upon needling to the proximity of one of the surfaces. When preparing the product by laminatig the coating layer 3, this mass centre of the blend fibres may lie on the opposite side of the main layer 1 compared with the coating layer 3. The coating layer 3 laminated to the free mineral fibres and blend fibers on the other side and said blend fibers promote the strengthening of the main layer 1 from the opposite sides, and the structure comprises in addition blend fibres extending due to needling and their greater length transversely in the direction of thickness of the main layer 1, thus connecting said two sides with each other. Such blend fibres extending in the direction of thickness can also be the fibres of the separate surface layer 2, the ends of which due to the needling have become exposed also on the opposite side of the main layer 1, and the coating layer 3 can be fixed on this side on which the ends are exposed. In case these blend fibres are thermally bondable fibres, a film can be formed of them prior to fixing of the coating layer in the manner described above referring to Fig. 1.

It shall be understood that in the case of partly melting the surface of a thermoplastic coating layer in laminating process, the penetration of the coating layer material into the base web is not necessarily so pronounced as would be the case if a flowing melted paste were used. In this case the coating layer 3 is practically separated in the depth direction from the main part of the main layer 1 even in absence of a separating layer on its surface. If the transversely extending fibres are of such type that no separating film can not be formed of them, such as chopped glass fibres, the joining of a coating layer 3 by thermally laminating in the above-mentioned manner to the surface on which the ends of the transversely extending blend fibres are exposed would result in improved strength but not to any inferior quality due to an excessive impregnation of the main layer 1 with the coating material.

The manufacturing stages of the main layer 1 of Fig. 2 comprise the laying of the mineral fibres mixed with the optional blend fibers on a perforated wire to form a mat e.g. in a manner which is described in Finnish Patent Application No. 880755. After this stage the layer is compressed to a desired density, generally over 200 kg/m³, whereafter the needling is performed immediately. The stroke length in the needling can be adjusted to comply with the thickness of the layer. If blend fibres are present, the needling can be effected so that the blend fibres move closer to the other surface and even will be exposed on the other surface. The chopped glass fibres, if present as blend fibres, are broken upon needling to a shorter length. The synthetic fibres, if present as blend fibres, remain intact in this process. The two-sided construction obtained in the needling process by means of blend fibres is of use considering the strength of the final product. If either chopped glass fibres or synthetic fibres are used as blend fibers, the strength of the main layer 1 can thus be created by virtue of the fact that there is more blend fibres in the proximity of one of the surfaces than in the middle, in which case the coating layer 3 can be fixed by the above-mentioned laminatig method, that is, the surface of a coating layer constituted of thermoplastic material is heated to the softening temperature and it is joined at this state to the surface of the main layer. The blend fibres act as a reinforcing factor in the way described in the preceding paragraph.

A good strength for the main layer 1 can thus be ensured without any chemical binders, which in normal dry method using rock wool are used even in an amount of 50 % of the weight of the fibres, having a harmful effect on the fire resistance of the product.

In Fig. 2, the layer thinner than the main layer 1 and comprising thermally bondable fibres is denoted by a broken line 2. The layer is between the main layer 1 and the coating layer 3 in the same fashion as in the combination web of Fig. 1. The fibres of this thin layer 2 may be, in conformity with the example of Fig.1, polyethylene, polypropylene or polyester discontinuous fibres or they may be some blend of the above-mentioned fibre grades, and the layer 2 can be bonded to the main layer 1 by needling.

The base web is fixed at its free surface onto a support 4, which in a roof construction can be any support structure, such as a rock wool or chipboard plate or a plate of cellular polystyrene or polyurethane. The fixing is carried out, depending on the underlying material, with a suitable glue, which in Fig. 2 is denoted by layer 5, or by nailing. The covering material can also be fixed directly on top of an old roofing felt when renovating roof coverings. The base web can also be laid as a separate layer against the support 4, whereafter the coating layer is laid on top of the middle layer. Both layers can be fixed mechanically on the support in this case.

It shall be noted that the blend fibres of the main layer 1 are of use when using a glue layer 5, because the transversely extending blend fibres are attached to the glue on one side and are connected to the coating layer 3 on the opposite side.

The main layer 1 of the base web of the covering material prevents as a thin mat of only ca 1-3 mm in thickness and having no chemical binders surprisingly well the spreading of fire to constructions beneath and also prevents the migration of the substances separated during the fire from the coating layer 3 to other constructions beneath. The experiments have shown also that during a normal use the main layer 1, having no chemical binders, prevents the migration of smallmolecule compounds during a long term use either from the coating layer 3 or from the glue layer 5 equally well as do the synthetic polymer fibres generally used for this purpose. One advantage of the base web in accordance with the invention, having no connection to fire protection, is that it can be used as a wellsetting "bearing layer" between the coating layer 3 and the support 4, in which case the covering as a whole is well laid on uneven supports.

Fig. 3 shows a manufacturing line for producing the base web of the invention. The discontinuous mineral fibres forming the main layer 1 are fed, optionally blended with other fibres, in the direction of arrow A, by means of a perforated conveyor belt 15. The fibres have been previously brought on the belt by means of a very fast rotating spike roll, known as such, using an air stream, in a state where they are well separated from each other. At this stage the mat on the belt 15 is somewhat wave-like.

The transport conveyor 15 carries the fibrous mat forward to a point 16 where the fibrous mat comes underneath a vertical air channel 17 disposed above the conveyor. In the air channel air is blown downwards in the direction of arrow B in such a fashion that the air goes through the fibrous mat, denoted by a broken line in the figure, and through the conveyor 15 and passes further along a channel disposed underneath the conveyor. At the same time the fibrous mat is compressed against the conveyor 15, which effect is illustrated by a broken line. In the inlet direction of the conveyor there is a gap between the front wall of the air channel and the conveyor 15, through which the thick fibrous mat passes to cross the air channel. In the rear wall of the channel at the point where the compressed fibrous mat leaves the channel 15, there is a roll 18 which on rotating in contact with the upper surface of the fibrous mat seals at the same time the gap present at this location. The fibres forming the surface layer 2 in accordance with the invention are supplied into the air channel 17 above the point where the fibrous mat enters the channel 17. The supply takes place along an obliquely downwards directed channel 19 which joins the channel 17. The fibres are fed into the channel by means of a fast rotating spike roll which disentangles and slings the fibres into the channel 19 from which they are caught with the air stream of the air channel 17, which presses the fibres on top of the rest of the fibrous mat. In this way a thin fibrous layer 2 having an even surface can be created on top of the main layer 1 as early as at this stage due to the fact that the points containing less fibres in the main layer 1 permit the air better to pass through, whereby these points automatically collect more fibres of the surface layer with the air stream B.

After the conveyor 15 the combination web so obtained is passed to needling, at which stage part of the fibres of the surface layer are orientated towards the main layer 1 by punching mechanically by needles. These fibres connect and bind mechanically the fibres of the surface layer 2 to those of the main layer 1.

Depending on the thickness of the fibrous mat and the length of the discontinuous fibres of the surface layer 2 the fibres can in this case become exposed also on the opposite side, and the back side is thereby provided with a pile-like structure by virtue of these protruding fibres penetrated through the main layer from the surface layer. The spike rolls and the needling are known previously in other fibre technology and they are therefore not described in greater detail. After the needling the fibres of the surface layer can be bonded together using thermal treatment, e.g. using temperatures within a range of 100 C - 200 C, depending on the materials of the surface layer. Heat treatment devices known previously can be used in the method.

The surface layer 2 can also be manufactured so that a thicker mineral fibre mat forming the main layer 1 is formed on top of the thin surface layer formed previously on the wire, in which case the method is in principle the same as above. Also in this case the layers can be bonded to each other by subsequent needling.

It is of course possible to influence on the grammage and the density of the fibrous mat by the supply rate of the fibres and by the velocity of the air stream B. As a common rule, by using fast rotating spike rolls disentangling effectively the fibres from each other, the mat obtained is provided with a more bulky texture, in which the fibres are more randomly oriented.

After the heat treatment the mat obtained can be wound e.g. into a roll and it can be used later as the raw material in the above-mentioned constructional elements.

The above described operational stages can be used also in cases where the surface layer 2 is not formed to the main layer 1.

### Example

A web according to Fig. 1 and forming the main layer 1 was manufactured from rock wool fibres having the length below 5 mm and the thickness of 6 um. The web had the final thickness of ca. 3 mm. The fibres were collected to form a web in such a fashion that they became randomly oriented. The weight of this layer was ca. 600 g/m.

On the upper surface of this main layer was sucked by means of an air stream a surface layer having the thickness of ca. 0.5 mm consisting of polyester fibres and polyethylene fibres of a length of ca. 20 mm and of a thickness of ca. 20 um. The weight of the surface layer was estimated to be ca. 100 g/m. The surface layer was fastened to the main layer by needling. After the fastening the surface layer was heat treated at a temperature of ca. 100 °C for obtaining the final combination web, at which stage the polyethylene fibres melted and glued the polyester fibres to each other.

After the heat treatment the binding layer could be seen on the surface of the main layer as a ca. 1 mm thick light-coloured layer against the brownish colouring of the main layer, that is, of the rock wool fibres. The binding layer could not be separated from the main layer by traction, but the entire combination web was disintegrated.

A PVC-paste layer was applied onto the combination web to form a coating layer having the final thickness of ca. 1mm. The melted paste layer caused simultaneously the melting of the polyester fibres, whereby the coating layer became firmly fixed on the surface layer. The combination web could not be separated on traction from this surface either, but the entire combination web was disintegrated.

The building element according to the invention has proved to have a good dimensional stability and step sound dampening capability.

In addition, some fire resistance experiments conducted with covering materials falling within the scope of the invention will be described in the following:

### Experiment 1

Covering constructions having the size of 400 mm x 1000 mm were prepared from the samples (constructions A, B and C). The constructions of the test pieces were as follows, starting from the upper face:

### Construction A

- "Alkorplan" single ply cover 1,2 mm (PVC coating layer)
- Mineral fibre web, consisting of rock wool fibres and comprising 15 % polyester fibres, bonded by needling
- Surface membrane PX 120/3800 (bituminous roofing felt of ca. 2-3 mm in thickness)

The surface membrane PX had been glued to a chipboard support, and the mineral fibre web and the "Alkorplan" covering had been fixed by nailing to said support.

### Construction B

- Surface membrane PX 120/3800
- Mineral fibre web (Construction A)
- Aluminium-coated polyurethane plate having a thickness of 55 mm

The different layers had been fixed by nailing to the polyurethane plate.

### Construction C

- Surface membrane PX 120/3800
- Mineral fibre web, 2 layers (Constr. A)
- Polystyrene plate having a thickness of 100 mm, grade N.

The surface membrane PX and the mineral fibre webs had been fixed by nailing to the polystyrene plate.

The measured thickness of the mineral fibre web used in the experiments was ca. 2-3 mm and the mass was 480 g/m.

### Experiments:

The fire resistance was determined according to the standard SFS 4194:E, Determination of the fire resistance of coverings against an exterior fire (Nordtest-method NT FIRE 006, VTT-1251-80). The results of the experiments are shown in Annexes 1 and 2.

### Summary:

On the experiment results it can be concluded that the covering materials A, B and C tested met the requirements set for a covering material of moderate fire spreading. These requirements are presented in the publication by the Nordic Committee on Building Regulations (NKB Product Rules 7, January 1989).

### Experiment 2

The following samples were tested in the experiment.

### Number 1

- Covering layer Alkorplan 35076 (1,2 mm thick PVC)
- Intermediate layer mineral fibre web (rock wool) containing ca. 10-12 % polyester, thickness ca. 2 mm and grammage ca. 340 g/m, bonded by needling
- One polystyrene plate, thickness 50 mm and density 19 kg/m.

### Number 2

- Covering layer and intermediate layer as hereinabove
- Polyurethane plate as a support, thickness 50 mm, density 41 kg/m³.

### Number 3

- Covering layer as hereinabove
- Mineral fibre web as an intermediate layer (rock wool) containing ca. 15 % polyester fibres and having a thickness of ca. 1,5 mm and a grammage of ca. 280 g/m, bonded by needling
- Polystyrene plate as a support, thickness 50 mm, density 19 kg/m³.

A calcium silicate plate served as a support for all three samples.

A test according to the standard DS/INSTA 413, corresponding to the Nordtest-method NT FIRE 006 was used as the test method. The results of the experiments are shown in Annex 3.

### ANNEX 1

### Construction A

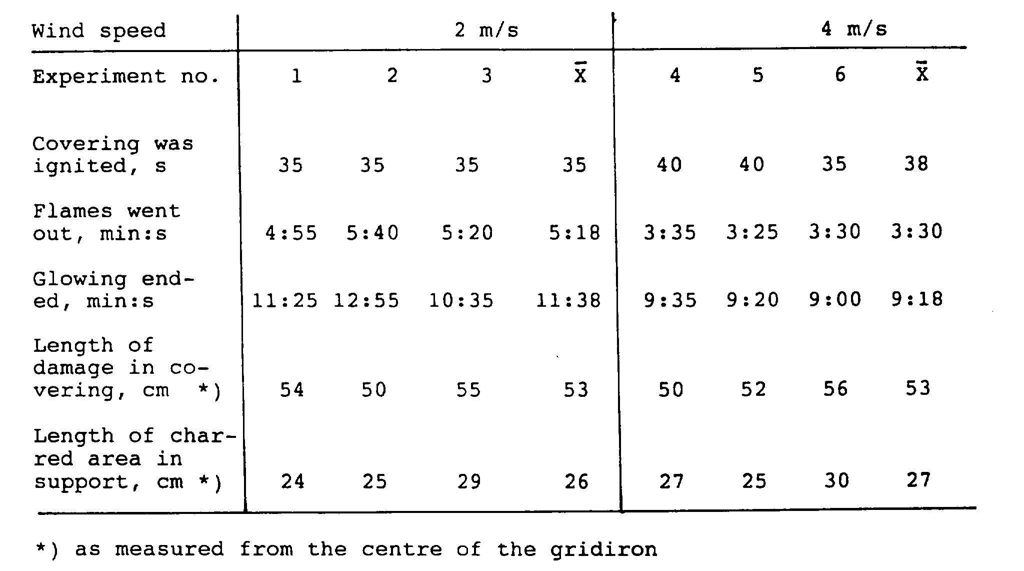

### Construction B

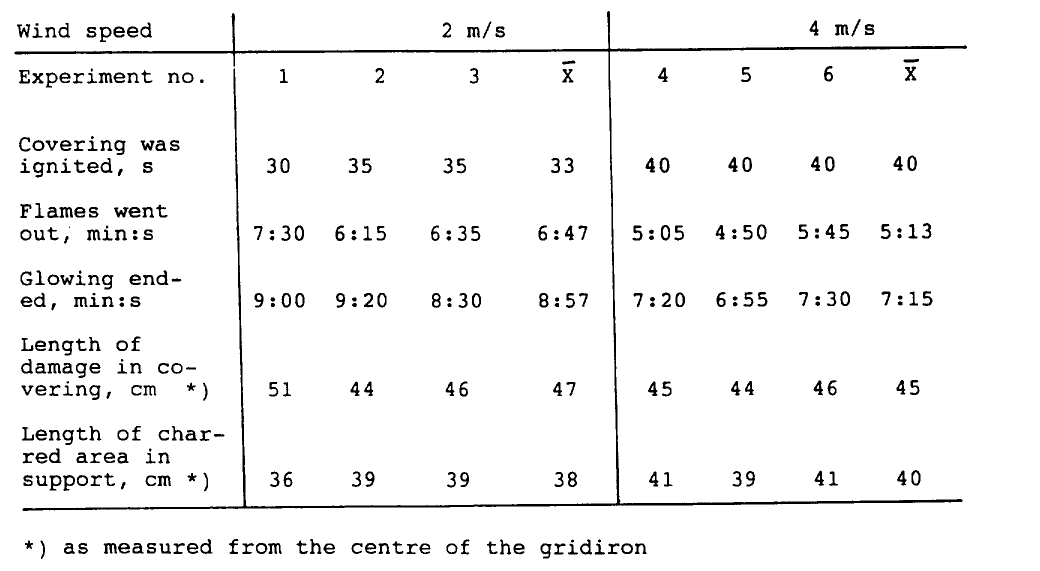

### ANNEX 2

### Construction C

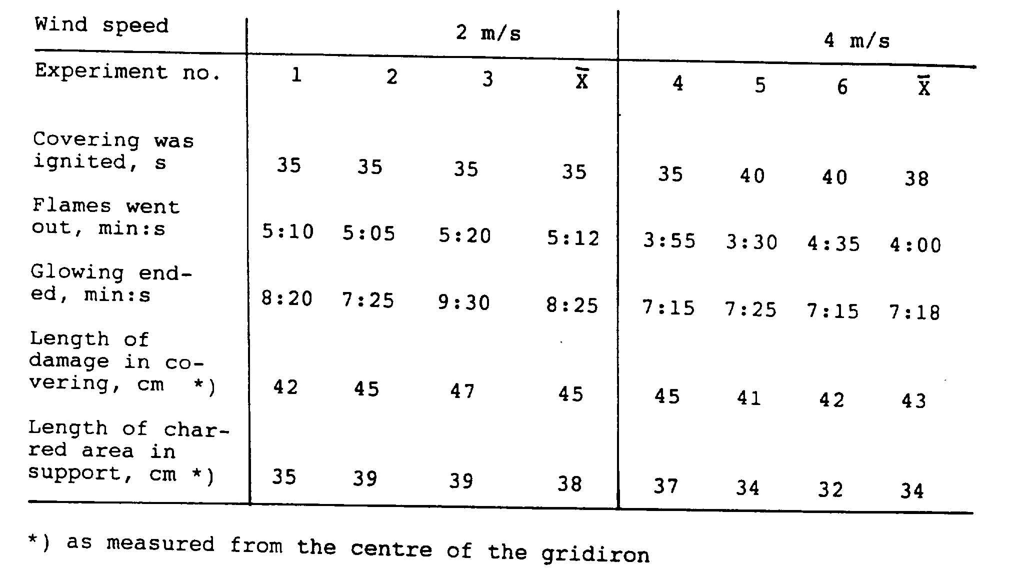

### ANNEX 3

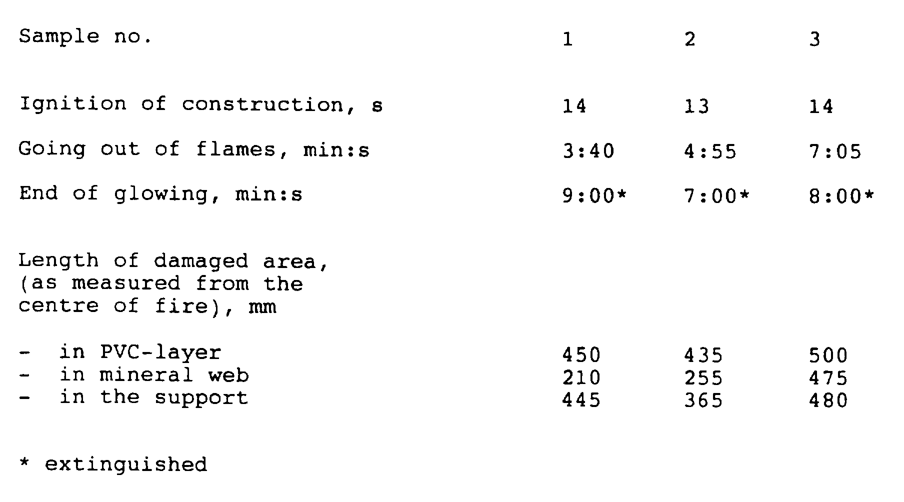

## Claims

1. Construction covering comprising a coating layer (3) of a polymeric material, as well as a base web comprising a main layer (1) forming the greatest part of the web in thickness and in grammage and being constituted of a non-woven mineral fibre mat containing predominantly discontinuous, randomly orientated mineral fibres, which are formed into the mat using a dry method and are bonded to each other mechanically, characterized in that the grammage of the main layer (1) is within a range of 200-600 g/m and that the polymeric material of the coating layer (3) is prevented from penetrating into the main layer,
1) by means of a thinner surface layer (2) of thermally bondable fibres,
2) by laminating by heating the surface of a film-form coating layer (3) to the softening temperature before joining it to the main layer (1), or
3) by the fact that the base web and coating layer (3) on top of it are both fixed mechanically on the support (4) so that they lie as separate layers against the support (4).

2. Construction covering as claimed in claim 1, characterized in that the coating layer (3) has been fixed onto the base web by laminating by heat with the help of the surface of a thermoplastic material of the coating layer (3).

3. Construction covering as claimed in claim 1, characterized in that the coating layer (3) and the base web are fixed on each other mechanically.

4. Construction covering as claimed in claim 1, characterized in that the main layer (1) contains, in addition to mineral fibres, chopped glass fibres in an amount no higher than 40 w-% as blend fibres.

5. Construction covering as claimed in claim 1, characterized in that the main layer (1) contains, in addition to mineral fibres, synthetic fibres in an amount not higher than 20 w-% as blend fibres.

6. Construction covering as claimed in claim 4 or 5, characterized in that the medium length of the blend fibres of the main layer (1) is greater than that of the mineral fibres.

7. Construction covering as claimed in any of claims 4 - 6, characterized in that the portion of the blend fibres is greater in the proximity of one of the surfaces of the main layer (1) than in the middle of the layer.

8. Construction covering as claimed in any of claims 4 - 7, characterized in that the coating layer (3) is bonded thermally to the mineral fibres of the main layer (1) and to the transversely extending blend fibres exposed on the surface of the main layer (1) by laminating by heat with the help of the surface of a thermoplastic material of the coating layer (3).

9. Construction covering as claimed in claim 1, characterized in that on the surface of the main layer (1) there are thermally bondable fibres.

10. Construction covering as claimed in claim 1, characterized in that the surface layer (2) is formed of at least two fibrous thermoplastic plastics materials having different melting points.

11. Construction covering as claimed in claim 1 or 10, characterized in that the polymeric material of the coating layer (3) is applied in the form of a melted paste onto said surface layer (2) on the main layer (1).

## Patentansprüche

1. Bauabdeckung, die eine Deckschicht(3) aus polymerem Material umfaßt und eine Grundplatte umfassend eine Hauptschicht (1), die den größten Teil der Dicke und des Flächengewichts der Bahn ausmacht und aus einer nichtgewebten Mineralfasermatte besteht, die vorwiegend endliche, willkürlich ausgerichtete Mineralfasem enthält, die unter Anwendung eines Trockenverfahrens zur Matte gebildet sind und mechanisch miteinander verbunden sind, dadurch **gekennzeichnet** daß das Flächengewicht der Hauptschicht (1) 200 bis 600 g/m beträgt und daß das Polymermaterial der Deckschicht (3) verhindert wird, in die Hauptschicht einzudringen,
1) mittels einer dünneren Oberflächenschicht (2) aus wärmebindungsfähigen Fasern,
2) durch Laminierung durch Erhitzen der Oberfläche einer folienartigen Deckschicht (3) auf die Erweichungstemperatur bevor sie an die Hauptschicht (1) gefügt wird, oder
3) infolge der Tatsache, daß die Grundbahn und die Deckschicht (3) auf ihrer Oberfläche beide mechanisch an dem Träger (4) fixiert sind, so daß sie als getrennte Schichten an dem Träger (4) anliegen.

2. Bauabdeckung nach Anspruch 1, dadurch **gekennzeichnet**, daß die Deckschicht (3) auf der Grundbahn (1) durch Wärmelaminierung mittels der Oberfläche eines thermoplastischen Materials der Deckschicht (3) fixiert ist.

3. Bauabdeckung nach Anspruch 1, dadurch **gekennzeichnet**, daß die Deckschicht (3) und die Grund bahn mechanisch aneinander fixiert sind.

4. Bauabdeckung nach Anspruch 1, dadurch **gekennzeichnet**, daß die Hauptschicht (1) neben den Mineralfasern noch geschnittene Glasfasem in einer Menge von maximal 40 Masseprozent als Mischfasern enthält.

5. Bauabdeckung nach Anspruch 1, dadurch **gekennzeichnet**, daß die Hauptschicht (1) neben den Mineralfasern auch synthetische Fasern in einer Menge von maximal 20 Masseprozent als Mischfasern enthält.

6. Bauabdeckung nach Anspruch 4 oder 5, dadurch **gekennzeichnet**, daß die mittlere Länge der Mischfasern der Hauptschicht (1) größer als die der Mineralfasern ist.

7. Bauabdeckung nach einem der Ansprüche 4 bis 6, dadurch **gekennzeichnet**, daß der Anteil der Mischfasem in der Nähe der einen Oberfläche der Hauptschicht (1) größer als in der Mitte der Schicht ist.

8. Bauabdeckung nach einem der Ansprüche 4 bis 7, dadurch **gekennzeichnet**, daß die Deckschicht (3) thermisch an die Mineralfasem der Hauptschicht (1) und an die quer verlaufenden, auf der Oberfläche der Hauptschicht (1) freiliegenden Mischfasern durch Wärmelaminierung mittels der Oberfläche eines thermoplastischen Materials der Deckschicht (3) gebunden ist.

9. Bauabdeckung nach Anspruch 1, dadurch **gekennzeichnet**, daß sich auf der Oberfläche der Hauptschicht (1) wärmebindungsfähige Fasem befinden.

10. Bauabdeckung nach Anspruch 1, dadurch **gekennzeichnet**, daß die Oberflächenschicht (2) aus mindestens zwei faserigen thermoplastischen Kunststoffmaterialien mit unterschiedlichen Schmelzpunkten gebildet ist.

11. Bauabdeckung nach Anspruch 1 oder 10, dadurch **gekennzeichnet**, daß das polymere Material der Deckschicht (3) in Form einer Schmelzpaste auf die genannte Oberflächenschicht (2) der Hauptschicht (1) aufgetragen ist.

## Revendications

1. Revêtement de constructions comprenant une couche de revêtement (3) en un matériau polymère de même qu'une nappe de base comprenant une couche principale (1) formant la majeure partie de la nappe en épaisseur et grammage et étant constituée d'un mat de fibres minérales non tissées contenant essentiellement des fibres minérales discontinues, orientées de façon aléatoire, qui sont transformées en mat au moyen d'un procédé à sec et sont agglomérées les unes aux autres mécaniquement, caractérisé en ce que le grammage de la couche principale (1) est compris dans la plage de 200 à 600 g/m et que la pénétration du matériau polymère de la couche de revêtement (3) dans la couche principale est interdite
1) au moyen d'une couche superficielle plus mince (2) en fibres thermocollantes,
2) par contrecollage par chauffage de la surface d'une couche de revêtement (3) filmogène à sa température de ramollissement avant sa réunion à la couche principale (1) ou
3) par le fait que la nappe de base et la couche de revêtement (3) se trouvant sur sa partie supérieure sont toutes deux fixées mécaniquement sur le support, 4) de sorte qu'elles reposent en tant que couches distinctes contre le support (4).

2. Revêtement de constructions selon la revendication 1, caractérisé en ce que la couche de revêtement (3) est fixée à la nappe de base par contrecollage thermique au moyen de la surface en matière thermoplastique de la couche de revêtement (3).

3. Revêtement de constructions selon la revendication 1, caractérisé en ce que la couche de revêtement (3) et la nappe de base sont fixées l'une à l'autre mécaniquement.

4. Revêtement de constructions selon la revendication 1, caractérisé en ce que la couche principale (1) contient, en plus des fibres minérales, des fibres de verre coupées en une quantité inférieure ou égale à 40 % en poids en tant que fibres de mélange.

5. Revêtement de constructions selon la revendication 1, caractérisé en ce que la couche principale (1) contient, en plus des fibres minérales, des fibres synthétiques en une quantité inférieure ou égale à 20 % en poids en tant que fibres de mélange.

6. Revêtement de constructions selon la revendication 4 ou 5, caractérisé en ce que la longueur moyenne des fibres de mélange de la couche principale (1) est supérieure à celle des fibres minérales.

7. Revêtement de constructions selon l'une quelconque des revendications 4 à 6, caractérisé en ce que la proportion de fibres de mélange est plus importante à proximité d'une des surfaces de la couche principale (1) qu'au centre de la couche.

8. Revêtement de constructions selon l'une quelconque des revendications 4 à 7, caractérisé en ce que la couche de revêtement (3) est thermocollée aux fibres minérales de la couche principale (1) et aux fibres de mélange s'étendant transversalement, dépassant de la surface de la couche principale (1) par contre-collage thermique à l'aide de la surface en matière thermoplastique de la couche de revêtement (3).

9. Revêtement de constructions selon la revendication 1, caractérisé en ce que des fibres thermocollantes se trouvent sur la surface de la couche principale (1).

10. Revêtement de constructions selon la revendication 1, caractérisé en ce que la couche superficielle (2) est formée d'au moins deux matières thermoplastiques fibreuses ayant des points de fusion différents.

11. Revêtement de constructions selon la revendication 1 ou 10, caractérisé en ce que le matériau polymère de la couche de revêtement (3) est appliqué sous la forme d'une pâte fondue sur ladite couche superficielle (2) se trouvant sur la couche principale (1).
